# EUROPÄISCHE PATENTSCHRIFT

(11) **EP 2 767 835 B1**
(45) Veröffentlichungstag und Bekanntmachung des Hinweises auf die Patenterteilung: **24.10.2018**
(21) Anmeldenummer: 13155158.2
(22) Anmeldetag: 14.02.2013
(51) Int. Cl.: G01N 35/00

(54) **Verfahren zur Überprüfung eines Analysegeräts**
Method for checking an analytical instrument
Procédé de vérification d'un appareil d'analyse

(43) Veröffentlichungstag der Anmeldung: 20.08.2014
(73) Patentinhaber: Mettler-Toledo GmbH, 8606 Greifensee (CH)
(72) Erfinder: Walter, Christian, 8704 Herrliberg (CH); Bécheiraz, Félix, 8180 Bülach (CH); Gerber, Manuela, 8408 Winterthur (CH); Rohner, Rolf, 8604 Volketswil (CH)
(74) Vertreter: Mettler-Toledo

(56) Entgegenhaltungen:
- EP-A2- 1 965 214
- US-A- 6 080 364
- US-A1- 2007 217 949
- US-A1- 2008 056 944
- US-A1- 2009 198 463
- US-A1- 2010 145 630
- US-A1- 2011 090 066
- US-A1- 2013 011 298
- US-B1- 6 579 717
- US-B2- 9 297 821

## Beschreibung

Die Erfindung betrifft ein Verfahren zur Überprüfung der Funktionsfähigkeit eines Analysegeräts mit mindestens einer ersten und zweiten Blindprobe.

Analysegeräte werden sowohl im Labor als auch im Produktions- oder Prozess-Umfeld zur chemischen und/oder physikalischen Analyse, wie beispielweise zur quantitativen Analyse, eingesetzt. Eine quantitative Analyse ist ein chemisches und/oder physikalisches Verfahren zur Ermittlung der Menge oder der Stoffmenge eines Stoffes oder einer Substanz in einer analysierten Probe. Ein Analysegerät kann ein sogenanntes Benchtop-Gerät, Handheld-Gerät oder In-Line-Gerät sein. Zudem werden Analysegeräte auch eingesetzt, um andere chemische und/oder physikalische Eigenschaften oder Parameter einer Probe zu ermitteln.

Beispiele für derartige Analysegeräte stellen Titratoren, UV/VIS-Spektrometer, Refraktometer sowie Geräte zur Dichtemessung, zur pH-Bestimmung, zur Bestimmung des Redoxpotentials, zur Leitfähigkeitsbestimmung, zur lonenbestimmung und/oder zur Bestimmung von gelösten Gasen dar. Mit diesen Geräten können verschiedene Parameter mindestens einer Substanz in einer Probe ermittelt werden, wie beispielsweise, die Konzentration, die Stoffmenge, die Dichte, die Brechzahl, der pH-Wert, das Redoxpotential und/oder die Leitfähigkeit. Analysegeräte können für die Bestimmung eines oder mehrerer Parameter einer Probe ausgestaltet sein. Beispiele des Standes der Technik sind in den Dokumenten US2013011298, EP1965214, US2011090066, US6579717, US2008056944, US2010145630 und US2009198463 gezeigt.

Die Funktionsfähigkeit von Analysegeräten sollte regelmässig überprüft werden, um eine gleichbleibende Qualität und Reproduzierbarkeit der Messergebnisse zu gewährleisten. Die regelmässige Überprüfung erfolgt häufig durch den Anwender, welcher eine oder mehrere bekannte Proben vermisst und das Ergebnis mit einem erwarteten Sollwert vergleicht. Als "bekannte" Probe, werden hier Proben bezeichnet, deren Inhalt sowie Parameter bzw. Sollwerte dem Anwender bekannt sind. Analysegeräte können zudem durch den Hersteller oder einen zertifizierten Dienstleister vor Ort überprüft werden, was für den Anwender deutlich teuer ist und daher meist nur in Bereichen und/oder für Anwendungen durchgeführt wird, für die beispielsweise eine entsprechende unabhängige Zertifizierung vorgeschrieben ist.

Zur erfolgreichen Durchführung der Überprüfung sollte der Anwender gute Kenntnisse über das zu überprüfenden Analysegerät haben und vor allem die gleichbleibende Qualität der zu untersuchenden Proben sicherstellen können. Die beispielhaft angegebenen chemischen und/oder physikalischen Analysemethoden sind sehr präzise und reagieren auf kleinste Verunreinigungen der Probe durch Fremdsubstanzen und/oder auf gealterte Proben mit fehlerhaften Messergebnissen. Die Messung einer verunreinigten und/oder gealterten Probe liefert ein für diese Probe korrektes Ergebnis, welches jedoch stark von dem erwarteten Ergebnis für die bekannte und vorzugsweise reine Probe abweicht. Die Überprüfung eines Analysegeräts durch den Anwender kann daher stark fehlerbelastet sein und zudem vom Wissen des Anwenders um die dabei ablaufenden physikalischen und/oder chemischen Prozesse beeinflusst werden.

Es besteht daher ein Bedarf an einem Verfahren zur unabhängigen Überprüfung eines Analysegeräts, welches vom Anwender einfach und kostengünstig durchgeführt werden kann, sowie eines Analysegeräts zur Durchführung dieses Verfahrens. Aufgabe des Verfahrens ist unter anderem die Reduktion von anwenderbedingten Fehlern, wie beispielsweise Einwaage-Fehlern und/oder Dosier-Fehlern, so dass das Verfahren auch ungeschulten Anwendern eine verlässliche und unabhängige Überprüfung des Analysegeräts ermöglicht.

Ein Verfahren zur Überprüfung eines Analysegeräts umfasst folgende Schritte: Bereitstellen des Analysegeräts, welches mindestens einen Sensor, eine Steuereinheit und ein Prüfprogramm umfasst; Auswählen des Prüfprogramms; Bereitstellen mindestens einer ersten und zweiten Blindprobe, welche für den Anwender unbekannt sind und jeweils eine Prüfsubstanz und ein Identifikationsmittel mit einer eineindeutigen Identifikation der jeweiligen Prüfsubstanz umfasst; Überprüfen der Gerätekonfiguration des Analysegeräts; Messen der ersten Blindprobe mit dem Analysegerät und Erfassen mindestens eines ersten Messwerts; Messen der zweiten Blindprobe mit dem Analysegerät und Erfassen mindestens eines zweiten Messwerts; Erfassen und Übertragen der ersten und zweiten Identifikation und des ersten und zweiten Messwerts an eine Prüfeinheit, und mittels der Prüfeinheit: Identifizieren der ersten und zweiten Prüfsubstanz und eines ersten und zweiten Sollwerts der ersten und zweiten Blindprobe anhand deren ersten und zweiten Identifikation, Ermitteln eines Prüfergebnisses durch Vergleich des ersten und zweiten Messwerts und/oder mindestens eines anhand des ersten und/oder zweiten Messwerts ermittelten Prüfwerts mit den Sollwerten der ersten und zweiten Blindprobe unter Berücksichtigung eines ersten und zweiten Grenzwerts, welcher in der Prüfeinheit hinterlegt ist; Bereitstellen einer Ausgabeeinheit und Übertragen des Prüfergebnisses an die Steuereinheit und Ausgeben des Prüfergebnisses mittels der Ausgabeeinheit.

Das Verfahren ermöglicht es dem Anwender, mindestens zwei für ihn unbekannte Blindproben zu vermessen und anhand des für die jeweilige Blindprobe ermittelten ersten und zweiten Messwerts eine Aussage über die Funktionsfähigkeit des Analysegeräts zu erhalten. Jede Blindprobe umfasst ein Identifikationsmittel mit einem eineindeutigen Code, welcher als Identifikation bezeichnet wird. Anhand der Identifikation kann jede Blindprobe eindeutig identifiziert werden und sowohl die darin enthaltene Prüfsubstanz als auch der Sollwert jeder Blindprobe ermittelt werden. Anhand eines Vergleichs zwischen dem ersten und zweiten Messwert und dem ersten und zweiten Sollwert unter Berücksichtigung vorgegebener erster und zweiter Grenzwerte kann ein Prüfergebnis ermittelt werden, das als Aussage über die Funktionsfähigkeit des Analysegeräts mit der Ausgabeeinheit dargestellt werden kann.

Die Ausgabeeinheit kann beispielsweise eine Anzeigeeinheit, wie zum Beispiel ein Display oder einen Monitor, ein Drucker, ein Speichermodul und/oder ein Mittel zur optischen und/oder akustischen Anzeige sein. Das Ergebnis kann dem Anwender beispielsweise als optisches oder akustisches Signal dargestellt werden, als Dokument angezeigt, im Analysegerät abgespeichert und/oder als Nachweis, elektronisch oder auf Papier, archiviert werden.

Die Überprüfung der Funktionsfähigkeit wird anhand von mindestens einer ersten und einer zweiten Blindproben durchgeführt, wobei die erste Blindprobe die erste Prüfsubstanz und das erste Identifikationsmittel mit der ersten Identifikation und die zweite Blindprobe die zweite Prüfsubstanz und das zweite Identifikationsmittel mit der zweiten Identifikation umfasst.

Auf diese Weise ist eine Anwender-unabhängige Überprüfung der Funktionsfähigkeit des Analysegeräts möglich, da der Anwender die tatsächlichen Werte der relevanten Parameter der jeweiligen Blindprobe, hier als Sollwerte bezeichnet, nicht kennt.

Der Anwender erhält für das jeweilige Messegerät und/oder das zu überprüfende Verfahren optimierte erste und zweite Blindproben, welche ohne weitere Aufbereitung direkt vermessen werden können. Auf diese Weise können Fehler die bei der Probenvorbereitung, wie beispielsweise Fehler bei der Einwaage oder der Verdünnung der Prüfsubstanz weitestgehend vermieden werden, und so die Genauigkeit der Überprüfung verbessert werden. Zudem können auch Fehler durch eine Manipulation der Messung durch den Anwender verringert werden, welcher bei Kenntnis des Sollwerts und des zu überprüfenden Geräts dieses z.B. durch einen vorzeitigen Abbruch der Messung, Bewegen der Probe oder des Geräts, dieses zur Ausgabe eines dem Sollwert entsprechenden Messwerts manipulieren kann.

Die Überprüfung der Geräte-Konfiguration des Analysegeräts kann eine manuelle oder direkte Überprüfung anhand einer Abfrage im Prüfprogramm oder einer beispielsweise im Handbuch oder der Anleitung hinterlegten Liste wie auch eine im Wesentlichen automatisierte Überprüfung durch die Steuereinheit umfassen. Zudem kann bei der Überprüfung der Gerätekonfiguration beispielweise die zu vermessenden Blindproben berücksichtigt werden, indem überprüft wird, ob die gewählte Gerätekonfiguration für die eingesetzten Blindproben überhaupt geeignet ist. Sollte dieses nicht der Fall sein, kann dem Anwender bereits vor der Vermessung der Blindprobe eine Fehlermeldung zusammen mit einer Möglichkeit zur Korrektur der Gerätekonfiguration angezeigt werden.

Das Prüfergebnis wird als Fehlermeldung, als einfache Bestätigung, als unabhängige Bestätigung oder als validierte Bestätigung der Funktionsfähigkeit des Analysegeräts dargestellt.

Eine Fehlermeldung wird erstellt, wenn beim Vergleich des ersten und zweiten Messwerts mit dem ersten und zweiten Sollwert eine zu grosse Abweichung vom vorgegebenen ersten und zweiten Grenzwert festgestellt wird. Die erlaubte Abweichung des ersten und zweiten Sollwerts vom entsprechenden Grenzwert wird wie auch der erste und zweite Grenzwert vorzugsweise anhand des zu überprüfenden Analysegeräts und/oder der Anwendung vorzugsweise vom Gerätehersteller bestimmt. Eine zu grosse Abweichung kann beispielweise auf eine fehlerhafte Gerätekonfiguration, auf den Einsatz falscher, gealterter und/oder verunreinigter Reagenzien wie auch auf einen falschen oder fehlerhaften Sensor hindeuten. Ein falscher Sensor ist beispielsweise ein für die Messung ungeeigneter Sensor. Fehlerhaft kann ein Sensor sein, welcher falsch kalibriert, justiert, gealtert und/oder defekt ist. Je nach Analysegerät und Prüfprogramm kann dem Anwender eine Fehlermeldung oder eine Fehleranalyse mit Hinweisen zur Fehlerbehebung angezeigt werden.

Eine einfache Bestätigung der Funktionsfähigkeit des Analysegeräts kann dem Anwender als Prüfergebnis angezeigt werden, wenn mindestens zwei Blindproben vermessen werden. Die beiden Blindproben können unterschiedlich oder identisch in Bezug auf die enthaltene Prüfsubstanz und deren Parameter sein. Eine einfache Bestätigung erlaubt dem Anwender eine schnelle Überprüfung der Funktionsfähigkeit des Analysegeräts und kann in vom Anwender gewünschten Zeitintervallen durchgeführt werden. Eine einfache Bestätigung kann zum Beispiel in Form eines einzelnen Symbols oder Signals von der Ausgabeeinheit ausgegeben werden.

Eine Korrelation eines ersten und zweiten Messwerts kann Hinweise auf die Funktionsfähigkeit eines Analysegeräts geben, jedoch ist die Aussagekraft einer auf zwei Messwerten basierenden Auswertung beschränkt. Eine auf zwei Messwerten basierende Auswertung ist insbesondere wie vorangehend erläutert für eine schnelle Überprüfung geeignet. Eine unabhängige Bestätigung der Funktionsfähigkeit des Analysegeräts, welche die Messung von mindestens einer ersten, zweite und dritten Blindprobe und die Ermittlung von mindestens einem ersten, zweiten und dritten Messwert umfasst, ist statistisch signifikanter. Dem Anwender wird als unabhängige Bestätigung zum Beispiel ein Dokument ausgegeben und/oder angezeigt, das eine herstellerseitige Bestätigung oder ein Zertifikat über die Funktionsfähigkeit des entsprechenden Analysegeräts ist. Dieses Dokument kann beispielsweise von Anwender als Kontroll-Nachweis ausgedruckt, abgelegt und/oder abgespeichert werden.

Weiterhin kann eine validierte Bestätigung der Funktionsfähigkeit des Analysegeräts als Prüfergebnis ausgegeben werden, welche beispielsweise die Normerfordernisse für das entsprechende Analysegerät oder die durchzuführende Anwendung erfüllt. Eine validierte Bestätigung basiert vorzugsweise ebenfalls auf der Messung von mindestens einer ersten, zweiten und dritten Blindprobe.

Die eineindeutige Identifikation des Identifikationsmittels umfasst einen maschinenlesbaren Code, wie beispielsweise eine Seriennummer, einen Barcode, einen Matrixcode und/oder einen RFID-Tag. Auf diese Weise kann die Identifikation jeder Blindprobe besonders einfach ausgelesen und an die Prüfeinheit weitergeleitet werden, wobei die Identifikation sowohl manuell als auch automatisch übertragen werden kann. Eine manuelle Übertragung ist zum Beispiel die Eingabe einer Seriennummer durch Abtippen. Eine automatische Übertragung beinhaltet das Auslesen der Identifikation mit einem geeigneten Lesegerät, welches die Identifikation direkt an die Steuereinheit und/oder Prüfeinheit überträgt. Das Lesegerät kann vorzugsweise die Identifikation direkt an die Prüf- und/oder Steuereinheit übertragen. Das Lesegerät kann als Bauteil im Analysengerät integriert oder als externes Gerät ausgestaltet sein.

Die Identifikation kann den Sollwert und/oder weitere Parameter der Prüfsubstanz der jeweiligen Blindprobe verschlüsselt enthalten, wobei die zur Entschlüsselung der Informationen benötigen Daten in der Prüfeinheit hinterlegt sind. Ebenso können diese Parameter in einer Datenbank hinterlegt sein und über die jeweilige Identifikation von der Prüfeinheit aus der Datenbank abgerufen werden.

Die Prüfeinheit kann eine Untereinheit der Steuereinheit sein. Dieses ist vorteilhaft, wenn auch die Parameter der Blindproben direkt in der Prüfeinheit hinterlegt sind oder von dieser entschlüsselt werden können, da so beispielsweise Einzelgeräte ohne Internetzugang bzw. ohne Schnittstelle zu einem übergeordneten System direkt überprüft werden können.

Die Prüfeinheit kann eine vom Analysegerät unabhängige externe Einheit sein. Diese externe Einheit kann beispielsweise als webbasierte Software, als Datenbank auf einer vom Anwender unabhängigen Rechnereinheit, zum Beispiel beim Gerätehersteller und/oder eine vom Analysegerät unabhängige Rechnereinheit sein, wie zum Beispiel ein mobiler Rechner, welcher zur Gerätewartung eingesetzt wird.

Die Prüfeinheit kann eine Datenbank umfassen, mit welcher die Identifikation des ersten, zweiten und/oder weiteren Identifikationsmittels mit den entsprechenden Sollwerten und/oder den entsprechenden Prüfsubstanzen jeder Blindprobe korreliert.

Ein Ausführungsbeispiel des erfindungsgemässen Verfahrens umfasst ein als Titrator ausgestaltetes Analysegerät, welcher einen Sensor, mindestens ein Dosierelement, mindestens eine Titrierlösung mit bekanntem Titer, welche mit dem Dosierelement dosiert wird, und eine Steuereinheit umfasst, in welcher ein Prüfprogramm hinterlegt ist. Das Verfahren zur Überprüfung des Titrator umfasst folgende Schritte:
Auswählen des Prüfprogramms; Bereitstellen einer ersten und zweiten Blindprobe in Form einer Lösung, wobei jede Blindprobe eine Prüfsubstanz und ein Identifikationsmittel mit der eineindeutigen Identifikation der jeweiligen Prüfsubstanz umfasst; Überprüfen der Gerätekonfiguration des Titrators; Titrieren der ersten Blindprobe gegen die mindestens eine Titrierlösung und Erfassen eines ersten Messwerts und Titrieren der zweiten Blindprobe gegen die mindestens eine Titrierlösung und Erfassen eines zweiten Messwerts, wobei der erste und zweite Messwert mit dem Verbrauch an Titrierlösung für die jeweilige Titration korreliert sind; und Erfassen und Übertragen der Identifikationen der ersten und zweiten Blindprobe, des Titers und des ersten und zweiten Messwerts an die Prüfeinheit. Mittels der Prüfeinheit kann die erste und zweite Prüfsubstanz und die erste und zweite Soll-Stoffmenge der ersten und zweiten Prüfsubstanz als erster und zweiter Sollwert anhand der jeweiligen Identifikation identifiziert, die erste und zweite Stoffmenge der erste und zweiten Prüfsubstanz ermittelt und ein Prüfergebnis durch Vergleich der ermittelten ersten und zweiten Stoffmengen mit den ersten und zweiten Soll-Stoffmengen unter Berücksichtigung der in der Prüfeinheit hinterlegten ersten und zweiten Grenzwerte ermittelt werden. Das Prüfergebnis wird an die Steuereinheit übertragen und mittels der bereitgestellten Ausgabeeinheit ausgegeben.

Die Anwendung des erfindungsgemässen Verfahrens für einen Titrator als Analysengerät ist besonders vorteilhaft. Die Blindproben werden dem Anwender bereits als fertige Lösung einer geeigneten Prüfsubstanz bereitgestellt, so dass insbesondere Einwaage und Verdünnungsfehler, ebenso wie Fehler aufgrund von verunreinigten und/oder gealterten Prüfsubstanzen minimiert oder sogar vermieden werden können. Zudem können dem Anwender Blindproben für eine bestimmte Applikation oder für eine bestimmte Gerätekonfiguration bereitgestellt werden.

Die Titration ist ein Verfahren der quantitativen Analyse in der Chemie zur Bestimmung der Stoffmenge oder der Konzentration einer Substanz in einer Lösung. Eine Probelösung eines bekannter Stoffes, dessen Konzentration oder Stoffmenge unbekannt ist, wird in einer gezielten chemischen Reaktion mit einer auf die gesuchte Substanz abgestimmten Titrierlösung umgesetzt, deren Konzentration und/oder Titer bekannt ist. Als "Titer" wird der Quotient aus der tatsächlich vorliegenden Konzentration einer Titrier- oder Masslösung und der angestrebten Konzentration derselben Lösung bezeichnet. Der Titer ist somit ein Faktor zur Kennzeichnung von Normallösungen. Das Volumen der bei der Titration verbrauchten Titrierlösung wird gemessen und anhand der Stöchiometrie der ablaufenden Reaktion die unbekannte Konzentration der Probelösung berechnet. Der Äquivalenzpunkt oder der Endpunkt der Titration kann bei Einsatz eines geeigneten Indikators anhand eines Farbumschlags visuell oder auch durch Einsatz eines geeigneten Sensors ermittelt werden. Bekannt sind unter anderem Säure-Base-Titrationen zur Bestimmung einer Säure- oder Basen-Konzentration, Fällungstitrationen, Thermometrische Titration, komplexometrische Bestimmungen und Redox-Titrationen wie auch Karl-Fischer-Titrationen zur Bestimmung des Wassergehalts. Da die Messergebnisse bei optimierten Titrationsverfahren sehr genau sind und sich die Titration gut automatisieren lässt, findet die Titration breite Anwendung in der chemischen Analytik. Ein Gerät für die automatisierte Titration wird auch als Titrator bezeichnet.

Ein weiteres Ausführungsbeispiel umfasst die Durchführung des erfindungsgemässen Verfahrens für ein UV/VIS-Spektrometer als Analysegerät, welches einen Sensor, eine Strahlenquelle und eine Steuereinheit umfasst, in welcher ein Prüfprogramm hinterlegt ist. Das Verfahren umfasst dabei die folgenden Schritte: Auswählen des Prüfprogramms; Bereitstellen der ersten und zweiten Blindprobe in Form von Lösungen, wobei jede Blindprobe eine Prüfsubstanz und ein Identifikationsmittel mit der eineindeutigen Identifikation der jeweiligen Prüfsubstanz umfasst: Überprüfen der Gerätekonfiguration des Spektrometers; Bestimmen mindestens eines ersten und zweiten Absorptionswerts und/oder einer ersten und zweiten Intensität des ersten und zweiten Absorptionswerts als erster und zweiter Messwert; Erfassen und Übertragen der Identifikation und des ersten und zweiten Messwerts an die Prüfeinheit und mittels der Prüfeinheit; Identifizieren der ersten und zweiten Prüfsubstanz und eines ersten und zweiten Sollwerts der jeweiligen Blindprobe anhand deren Identifikation; Ermitteln eines ersten und zweiten Prüfwerts anhand des ersten und zweiten Messwerts, wobei der Prüfwert die Stoffmenge und/oder die Prüfsubstanz in der jeweiligen Blindprobe ist; Ermitteln des Prüfergebnisses durch Vergleichen des ersten und zweiten Prüfwerts mit dem ersten und zweiten Sollwert unter Berücksichtigung des in der Prüfeinheit hinterlegten ersten und zweiten Grenzwerts; Übertragen des Prüfergebnisses an die Steuereinheit und Ausgeben des Prüfergebnisses mittels der bereitgestellten Ausgabeeinheit.

Selbstverständlich kann anstelle eines Absorptionswerts auch ein Transmissionswert erfasst werden, wobei diese beiden Werte rechnerisch ineinander überführt werden können.

Die Durchführung des Überprüfungs-Verfahrens für ein UV/VIS-Spektrometers ist vorteilhaft, da dem Anwender Blindproben zur Verfügung gestellt werden können, welche auf eine bestimmte Applikation und/oder eine bestimmte Gerätekonfiguration abgestimmt sind. Zudem werden Einwaage- und Verdünnungsfehler wie auch Fehler aufgrund verunreinigter oder gealterter Prüfsubstanzen vermieden oder zumindest reduziert. Die Überprüfung eines UV/VIS-Spektrometers kann die Messung von zwei oder mehr identischen oder unterschiedlichen Blindproben umfassen.

Im Gegensatz zur Titration wird bei der UV/VIS-Spektroskopie die Blindprobe nicht verbraucht, so dass diese mehrfach einsetzbar ist. Um zu verhindern, dass eine gealterte Blindprobe vom Anwender eingesetzt wird, kann beispielsweise ein Haltbarkeitsdatum in der Identifikation enthalten oder über die Identifikation ermittelbar sein. Weiterhin kann der Blindprobe ein Indikator zugesetzt werden, welcher beispielsweise auf die für die Messung eingesetzte Wellenlänge irreversible reagiert und die Blindprobe für weitere Messungen unbrauchbar macht oder eine visuell erkennbare Veränderung der Blindprobe verursacht.

Vorzugweise werden Blindproben für die Überprüfung von UV/VIS-Spektrometern in Form einer mit einer gelösten Prüfsubstanz vorgefüllten, verschlossenen Küvette bereitgestellt, welche direkt ins Analysegerät eingesetzt werden können.

In einer weiteren Ausgestaltung ist das Analysegerät ein Dichte-Messgerät und/oder ein Refraktometer. Der zugehörige Messwert ist dann die Dichte und/oder die Brechzahl der Prüfsubstanz.

Wie bereits erwähnt kann das erfindungsgemässe Verfahren für zwei oder mehr Blindproben durchgeführt werden, wobei diese dieselbe Prüfsubstanz und gleiche Sollwerte; dieselbe Prüfsubstanz und unterschiedliche Sollwerte; unterschiedliche Prüfsubstanzen und gleiche Sollwerte; oder unterschiedliche Prüfsubstanzen und unterschiedliche Sollwerte enthalten können.

Weiterhin können auch in der Umgebung des Analysegeräts vorliegende Substanzen mit allgemein bekannten Parametern, wie beispielsweise Luft, als weitere Blindprobe vermessen und in die Ermittlung des Prüfergebnisses einbezogen werden.

Die Auswahl der Prüfsubstanz und der Art der Blindproben wird in Abhängigkeit des zu überprüfenden Analysegeräts und/oder der zu überprüfendend Applikation ausgewählt. Unter "Applikation" wird hier eine für ein Analysengerät spezifische Anwendung bezeichnet, welche ein bestimmte Gerätekonfiguration und/oder Auswahl des Messprogramms umfasst.

Ein weiterer Aspekt der Erfindung betrifft ein System zur Überprüfung der Funktionsfähigkeit eines Analysegeräts mittels des erfindungsgemässen Verfahrens. Das System umfasst ein Analysegerät, eine Prüfeinheit, eine Ausgabeeinheit und mindestens eine erste und zweite für den Anwender unbekannte Blindprobe. Das Analysegerät wiederum umfasst mindestens einen Sensor, eine Steuereinheit und ein Prüfprogramm, wobei mit dem Analysegerät mindestens ein erster und zweiter Messwert der ersten und zweiten Blindprobe erfasst wird. Jede Blindprobe umfasst eine Prüfsubstanz und ein Identifikationsmittel mit einer eineindeutigen Identifikation der jeweiligen Prüfsubstanz. Die Prüfeinheit umfasst ein Erfassungsmodul, ein Berechnungsmodul, ein Datenmodul und ein Transfermodul. Mit dem Transfermodul können Daten und Informationen zwischen der Steuereinheit und der Prüfeinheit übertragen werden. Mit dem Erfassungsmodul können die erste und zweite Identifikationen und der mindestens erste und zweite Messwert der ersten und zweiten Blindprobe erfasst werden, sowie anhand der Identifikation ein erster und zweiter Sollwert der ersten und zweiten Prüfsubstanz der jeweiligen Blindprobe ermittelt werden, wobei die Prüfsubstanzen und die Sollwerte im Datenmodul hinterlegt sind. Mit dem Berechnungsmodul kann ein Prüfergebnis durch Vergleich des mindestens ersten und zweiten Messwerts oder mindestens einem ersten und zweiten mit diesem Messwert korrelierten Prüfwert mit den im Datenmodul hinterlegten Sollwerten unter Berücksichtigung eines ersten und zweiten im Datenmodul hinterlegten Grenzwerts ermittelt, und nach Übertragung des Prüfergebnisses durch das Transfermodul von der Prüfeinheit an die Steuereinheit mittels der Ausgabeeinheit ausgegeben werden.

Das System umfasst vorzugsweise als Analysegerät einen Titrator, ein UV/VIS Spektrometer, ein Refraktometer, ein pH-Meter, ein Leitfähigkeits-Messgerät, ein Gerät zur Dichtebestimmung und/oder ein Gerät zur Bestimmung der lonenkonzentration oder des Gehalts eines gelösten Gases, insbesondere Sauerstoff. Weiterhin kann das Analysegerät so ausgestaltet sein, dass es mehrere Parameter einer Probe erfassen kann.

Die Ausgabeeinheit kann beispielsweise eine Anzeigeeinheit, wie zum Beispiel ein Display oder einen Monitor, ein Drucker, ein Speichermodul und/oder ein Mittel zur optischen und/oder akustischen Anzeige sein. Das Ergebnis kann dem Anwender beispielsweise als optisches oder akustisches Signal dargestellt werden, als Dokument oder Symbol angezeigt, im Analysegerät abgespeichert und/oder als Nachweis, elektronisch oder auf Papier, archiviert werden.

Die Blindprobe kann zudem ein Behältnis umfassen, in welchem die Prüfsubstanz als Feststoff oder in gelöster Form vorliegt. Die Ausgestaltung des Behältnisses ist an das zu überprüfende Analysengerät angepasst, so dass der Anwender die Blindprobe vorzugweise direkt und/oder ohne weitere Probenvorbereitung vermessen kann.

Zudem kann die Blindprobe einen Indikator umfassen, welcher eine bereits für das Überprüfungsverfahren verwendete Blindprobe visuell erkennbar kennzeichnet.

Das erfindungsgemässe Verfahren sowie verschieden Systeme zur Durchführung des Verfahrens werden anhand der folgenden Figuren näher beschrieben, wobei gleiche Elemente mit gleichen Bezugszeichen versehen sind. Die Figuren zeigen:
- Fig. 1: Eine schematische Darstellung des erfindungsgemässen Verfahrens zur Überprüfung eines Analysegeräts;
- Fig. 2: eine schematische Darstellung eines Analysegeräts;
- Fig. 3: eine schematische Darstellung eines Titrators als Analysegerät;
- Fig. 4: eine schematische Darstellung eines UV/VIS-Spektrometers als Analysegerät;
- Fig. 5: eine schematische Darstellung eines Analysegeräts zur Dichte-Bestimmung als Analysegerät;
- Fig. 6: eine schematische Darstellung eines Refraktometers als Analysegerät.

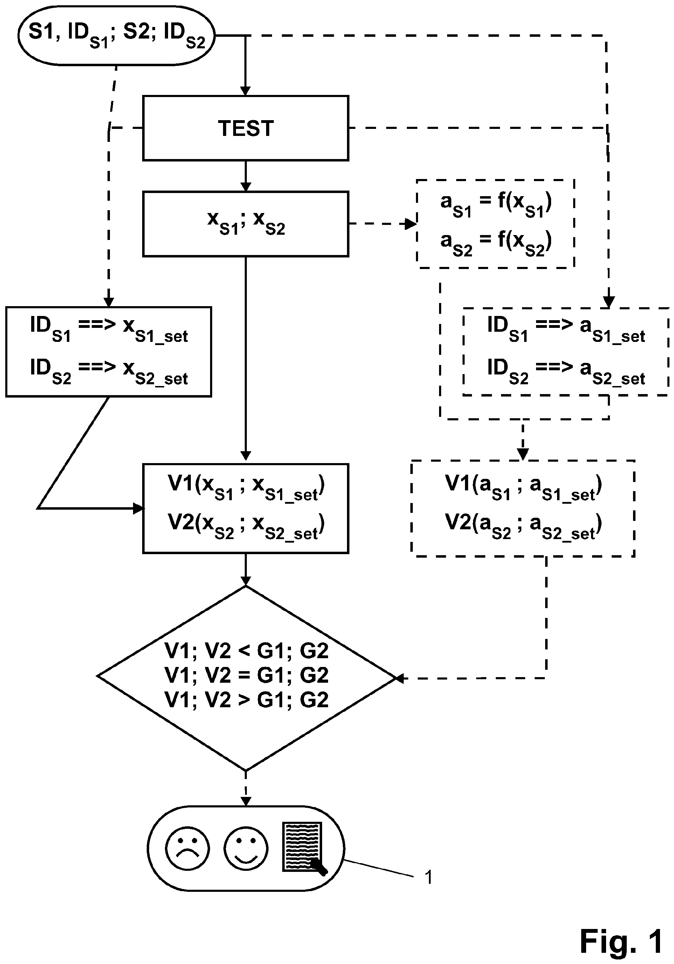

Figur 1 zeigt eine schematische Darstellung des erfindungsmässen Verfahrens zur Überprüfung eines Analysegeräts.

Das Verfahren umfasst die Bereitstellung einer ersten und zweiten Blindprobe 51,52, die jeweils eine Prüfsubstanz und eine eineindeutige erste und zweite Identifikation *ID*_{*S*1}*,ID*_{*S*2} umfasst.

Nach Auswahl des geeigneten Prüfprogramms wird zunächst die Gerätekonfiguration überprüft, hier als TEST bezeichnet. Die Gerätekonfiguration kann direkt aufgrund der Voreinstellungen im Prüfprogramm und/oder unter Berücksichtigung der gewählten ersten und zweiten Blindprobe *S*1,*S*2 überprüft werden, so dass die Gerätekonfiguration für das Prüfprogramm und/oder die eingesetzten Blindproben *S*1,*S*2 optimiert ist. Anschliessend werden die erste und zweite Blindprobe *S*1,*S*2 mit dem Analysegerät vermessen und ein erster und zweiter Messwert x_{S1},x_{S2} bestimmt. Anhand der ersten und zweiten Identifikation ID_{S1}, ID_{S2} kann mittels der Prüfeinheit ein erster und zweiter Sollwert x_{S1_set}, x_{S2_set} ermittelt werden, welcher mit dem entsprechenden Messwert x_{S1},x_{S2} verglichen wird. Dieser Vergleich liefert einen ersten und zweiten Vergleichswert oder eine erste und zweite Vergleichsfunktion, hier als V1(x_{S1}; x_{S1ₛₑₜ}); V2(x_{S2}; x_{S2ₛₑₜ}) bezeichnet. Selbstverständlich ist es auch möglich, dass eine einzige die erste und zweite Vergleichsfunktion oder Vergleichswerte umfassender Vergleichswert oder Vergleichsfunktion ermittelt wird. Der Vergleich kann in Abhängigkeit der Anzahl und Art der Messwerte eine einfache Differenzbildung sein und/oder bekannte statistische Auswertungsroutinen umfassen. Der Vergleich findet unter Berücksichtigung eines ersten und zweiten Grenzwerts oder Grenzwertbereichs Gl, G2 statt, welche ein Mass für die erlaubte Abweichung des ersten und zweiten Messwerts x_{S1},x_{S2} vom jeweiligen Sollwert x_{S1_set}, x_{S2_set} darstellen. Das Prüfergebnis 1 wird aufgrund der Abweichung vom ersten und zweiten Grenzwert Gl, G2 ermittelt und dargestellt. Bei einer Abweichung des ersten und zweiten Sollwerte x_{S1_set}, x_{S2_set} vom ersten und zweiten Grenzwert G1, G2 wird eine Fehlermeldung als Prüfergebnis 1 ausgegeben, welches Hinweise auf eine mögliche Fehlerursache und/oder auf Möglichkeiten zur Fehlerbehebung enthalten kann. Weiterhin kann das Prüfergebnis 1 als einfache Bestätigung oder bei Vermessung von mindestens drei Blindproben als unabhängige oder validierte Bestätigung angezeigt werden.

Anstelle der Messwerte *x*_{*S*1}*,x*_{*S*2} kann das Prüfergebnis 1 auch unter Berücksichtigung eines ersten und zweiten Prüfwerts *a*_{*S*1}*,a*_{*S*2} und eines zugehörigen ersten und zweiten Prüf-Sollwerts *a*_{*S*1}*_{_set},a*_{*S*2*_set*} ermittelt werden, wobei die Prüfwerte *a*_{*S*1}*,a*_{*S*2} mit dem jeweiligen Messwert *x*_{*S*1}*,x*_{*S*2} korreliert sind und *a*_{*S*1} = *f*(*x*_{*S*1}) bzw. *a*_{*S*2} = *f*(x_{*S*2}) gilt. Der erste und zweite Prüfwert *a*_{*S*1}*,a*_{*S*2} können beispielsweise ein aus dem jeweiligen Messwert *x*_{*S*1},x_{*S*2} ermittelte Werte sein.

Selbstverständlich kann das erfindungsgemässe Verfahren auch mit drei oder mehr Blindproben durchgeführt werden. Die Messwerte aller Blindproben werden in den Vergleich und somit die Ermittlung des Prüfergebnisses mit einbezogen.

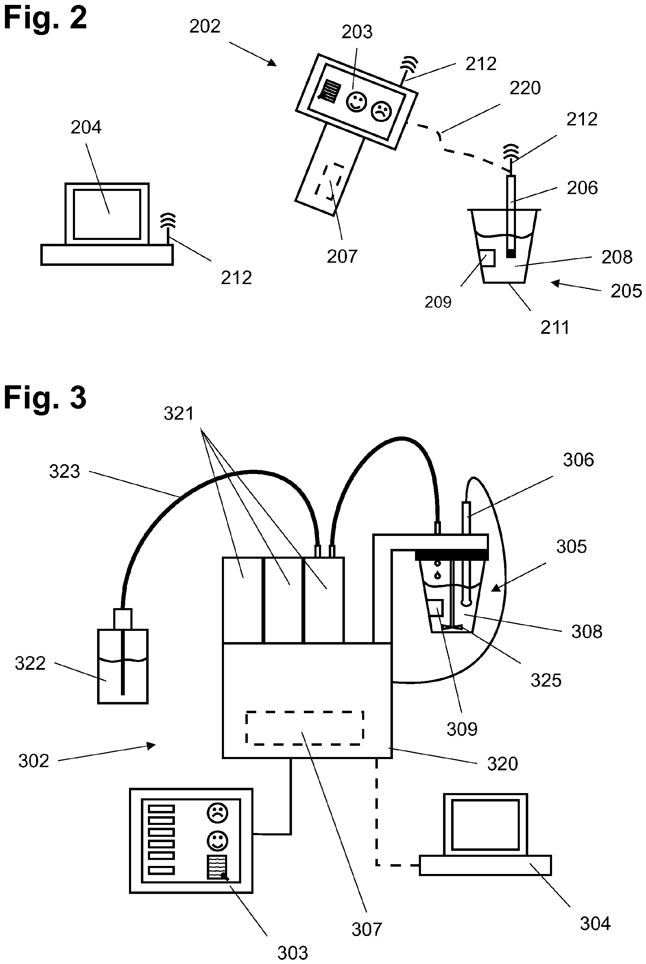

Figur 2 zeigt stark schematisiert ein System zur Durchführung des erfindungsgemässen Verfahrens mit einem Analysengerät 202, welches eine Steuereinheit 207, einen Sensor 206 und eine Ausgabeeinheit 203 umfasst. Die Ausgabeeinheit 203 ist hier als im Analysegerät 202 integrierte Anzeigeeinheit oder Display ausgestaltet. Die Ausgabeeinheit 203 und die Steuereinheit 207 sind in dem hier gezeigten Ausführungsbeispiel miteinander verbunden bzw. im gleichen Gehäuse angeordnet. Der Sensor 206 kann mit der Steuereinheit 207 entweder über ein hier angedeutetes Kabel 220 oder über geeignete Übertragungsmittel 212 verbunden sein. Die Übertragungsmittel 212 können beispielsweise als drahtlose Sende- oder Empfangseinheit ausgestaltet sein oder auch eine Internet- oder webbasierte DatenÜbertragung ermöglichen. Zur Überprüfung des Analysegeräts 202 ist der Sensor 206 in Kontakt mit einer Prüfsubstanz 208 einer Blindprobe 205. Die Blindprobe umfasst zudem ein Behältnis 211, in welchem die Prüfsubstanz 208 angeordnet ist und ein eineindeutiges Identifikationsmittel 209 mit einer Identifikation zur Ermittlung der Art und eines oder mehrerer Parameter der Prüfsubstanz 208. Weiterhin umfasst das System eine Prüfeinheit 204, welche in diesem Ausführungsbeispiel ebenfalls ein Übertragungsmittel 212 zur Kommunikation mit der Steuereinheit 207 umfasst. Die Prüfeinheit 204 und die Ausgabeeinheit 203 können beispielsweise als webbasierte Anwendung und Anzeigeeinheit ausgestaltet, so dass das Prüfergebnis von der webbasierten Anwendung ermittelt und dem Anwender durch eine geeignete Anzeigeeinheit, wie einem Bildschirm oder Display, ausgegeben wird. Das in Figur 2 gezeigte System kann als Analysegerät 202 beispielweise ein pH-Meter, ein Gerät zur Leitfähigkeitsmessung, zur Bestimmung des Redoxpotentials, zur lonenbestimmung und/oder zur Bestimmung der Konzentration gelöster Gase, wie insbesondere Sauerstoff umfassen. Das Analysegerät 202 kann sowohl als sogenanntes Benchtop-Gerät oder als Handheld-Gerät ausgestaltet sein.

Figur 3 zeigt stark schematisiert ein System zur Überprüfung der Funktionsfähigkeit eines Titrators 302 als Analysegerät. Das System umfasst den Titrator 302, eine Ausgabeeinheit 303, eine Prüfeinheit 304 und eine Blindprobe 305.

Der Titrator 302 umfasst ein Gehäuse 320 in welchem eine Steuereinheit 307, wie hier nur angedeutet, angeordnet ist. Weiterhin umfasst der Titrator 302 mindestens ein Dosierelement 321, hier sind drei gezeigt, mit welchem eine Titrierlösung 322 zur Blindprobe 305 zudosiert werden kann. Jedes Dosierelement 321 ist dazu ausgelegt eine Titrierlösung zu dosieren. Mehrere Dosierelemente 321 ermöglichen somit beispielsweise den Titrator 302 für die Titration unterschiedlicher Substanzen einzusetzen oder Titrierlösungen mit verschiedenem Titer bereitzustellen. Das Dosierelement 321 ist hier über Flüssigkeitsverbindungen 323 einerseits mit einem die Titrierlösung 322 enthaltenden Vorratsgefäss und über einen Halter 311 mit der Blindprobe 305 verbunden. Der Halter 311 ist hier am Gehäuse 320 befestigt.

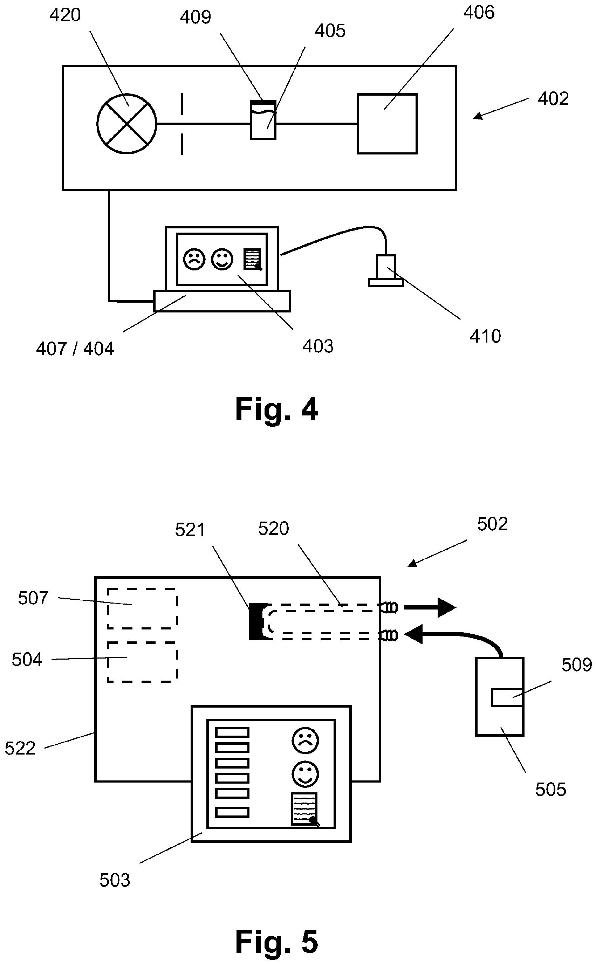

Die Blindprobe 305 umfasst ein Behältnis in welchem sich eine Lösung einer Prüfsubstanz 308 befindet und ein am Behältnis befestigtes eineindeutiges Identifikationsmittel 309. Das Identifikationsmittel 309 kann beispielsweise ein RFID-Tag, eine Seriennummer, ein Barcode oder ein Matrixcode sein. Ein Lesegerät zum Auslesen der Identifikation des Identifikationsmittels 309 kann, wie in Figur 4 gezeigt, mit dem Analysegerät verbunden oder in dieses integriert sein. Ebenso kann die Identifikation vom Anwender erfasst und manuell eingegeben werden, insbesondere wenn es sich um eine Seriennummer handelt.

In der Lösung der Prüfsubstanz 308 ist im Betrieb des Titrators 302 zudem ein Rührer 325 zur Durchmischung der Probe während der Titration und mindestens ein Sensor 306 angeordnet. Für Säure-Base-Titration kann beispielsweise ein pH-Sensor eingesetzt werden.

Die Ausgabeeinheit 303 ist mit dem Titrator 302 über ein Kabel verbunden. Die Prüfeinheit 304, welche hier als Computer dargestellt ist, kann direkt oder über eine geeignete Datenübertragungsverbindung mit der Steuereinheit 307 verbunden sein. Die Datenübertragung kann über ein Kabel, über eine Funkverbindung, über das Ethernet oder eine andere zur Datenübertragung geeignete Vorrichtung erfolgen, wie es durch die gebrochene Verbindungslinie zwischen dem Titrator 302 und der Prüfeinheit 304 angedeutet ist.

Das Verfahren zur Überprüfung der Funktionsfähigkeit eines Titrators wird im Folgenden am Beispiel einer Säure-Base-Titration beschrieben. Dem Anwender werden mindestens zwei Blindproben mit Prüfsubstanz und Identifikationsmittel zur Verfügung gestellt. Jede Blindprobe umfasst ein Behältnis mit einem Deckel in welchem sich die gelöste Prüfsubstanz befindet. Die erste Blindprobe enthält beispielsweise Tris(hydroxymethyl)-aminomethan (TRIS) als Prüfsubstanz in einer ersten Stoffmenge in Wasser gelöst. Die zweite Blindprobe enthält dieselbe Prüfsubstanz oder eine andere Prüfsubstanz in einer zweiten Stoffmenge als wässrige Lösung. Die Stoffmenge ist dem Anwender nicht bekannt, kann jedoch wie auch der absolute Einwaage-Fehler von der Prüfeinheit mittels der eineindeutigen Identifikation ermittelt werden. Zusammen mit den Blindproben erhält der Anwender Anweisungen zur Gerätekonfiguration sowie zur einzusetzenden Titrierlösung und dessen Titer. Für eine Säure-Base-Titration wird beispielsweise eine 0.1 N Natronlauge angegeben, welche der Anwender bereitstellt und mit der Dosiereinheit des Titrators verbindet.

Für die Messung entfernt der Anwender den Deckel des Behältnisses, vorzugweise so, dass sich keine Substanzreste am Deckel befinden, setzt die Blindprobe in den Titrator ein und wählt das Prüfprogramm aus.

Anhand der Identifikation der ersten und/oder zweiten Blindprobe erhält der Anwender Informationen zur manuellen Überprüfung oder das Analysegerät erhält Informationen zur automatischen Überprüfung der Gerätekonfiguration. Dabei wird insbesondere getestet, ob der für die Messung korrekte Sensor und die korrekte Titrierlösung eingesetzt werden. Nach erfolgreicher Überprüfung der Gerätekonfiguration wird die erste Blindprobe titriert und der erste Messwert erfasst. Anschliessend wird der zweite Messwert der zweiten Blindprobe erfasst. Wenn der Anwender eine unabhängige oder validierte Bestätigung erhalten möchte, wird mindestens eine dritte und/oder weitere Blindprobe vermessen.

Der erste und zweite Messwert, der Titer der Titrierlösung sowie die erste und zweite Identifikation werden dann an die Prüfeinheit übermittelt und dort weiterverarbeitet. Dieses kann durch Eingabe der Daten auf einer Webseite oder die automatische Übertragung der Daten an die externe oder Geräteinterne Prüfeinheit geschehen. Anhand dieser Daten wird von der Prüfeinheit ein erster und zweiter Sollwert für die jeweilige Blindprobe abgefragt und mit dem jeweiligen Messwert ein Vergleichswerts oder eine Vergleichsfunktion gebildet. Zur Ermittlung des Prüfergebnisses wird die Vergleichsfunktion bzw. der Vergleichswert mit einem ersten oder zweiten Grenzwerts verglichen. Jeder Grenzwert stellt ein Mass für die erlaubte Abweichung des jeweiligen Messwerts vom Sollwert da.

Das Prüfergebnis wird mittels der Prüfeinheit ermittelt und an die Steuereinheit übertragen, welche dieses dem Anwender auf der Ausgabeeinheit ausgibt. Weichen die Messwerte zu stark von den Sollwerten ab, so wird eine Fehlermeldung oder Fehleranalyse angezeigt. Liegen die Messwerte innerhalb der durch die Grenzwerte vorgegebenen Fehlertoleranz, so wird dem Anwender bei Vermessung von zwei Blindproben eine einfache Bestätigung und bei Vermessung von drei oder mehr Blindproben eine unabhängige oder eine validierte Bestätigung angezeigt.

Figur 4 zeigt stark schematisiert ein System zur Überprüfung der Funktionsfähigkeit eines UV/VIS-Spektrometers 402 als Analysegerät mit einer angeschlossenen Steuereinheit 407, welche eine Prüfeinheit 404 und eine Ausgabeeinheit 403 umfasst.

Das Spektrometer 402 umfasst eine Lichtquelle 420, welche beispielsweise eine Breitbandlichtquelle, ein Laser oder eine Laserdiode ist, und einen Detektor als Sensor 406. Die von der Lichtquelle 420 ausgesandte Strahlung wird durch eine Blindprobe 405 geleitet und nach Wechselwirkung mit einer in der Blindprobe 405 enthaltenen Prüfsubstanz vom Detektor 406 detektiert. Je nach Bandbreite der eingesetzten Lichtquelle 420 kann das Messergebnis als Spektrum, also als Verteilung der Absorption oder Transmission in Relation zur Wellenlänge oder Wellenzahl oder als einzelner Absorptions- oder Transmissionswert bei einer bestimmten Wellenlänge oder Wellenzahl bestimmt werden.

Die Blindprobe 405 für ein Spektrometer ist vorzugsweise eine Lösung der Prüfsubstanz in einer Küvette, welche für die eingesetzte Strahlung optisch transparent ist. Die Blindprobe 405 umfasst zudem ein Identifikationsmittel 409, welches ausserhalb des Strahlengangs befestigt ist, beispielsweise wie hier gezeigt oben auf der Blindprobe 405.

An die Steuereinheit 407 kann ein Lesegerät 410 angeschlossen sein, mit welchem die Identifikation des Identifikationsmittels erfasst und an die Steuereinheit 407 übertragen werden kann.

Zur Durchführung des erfindungsgemässen Verfahrens mit einem UV/VIS-Spektrometer werden dem Anwender mindestens zwei Blindproben mit vorzugweise unterschiedlichen Prüfsubstanzen und/oder unterschiedlichen Parametern zur Verfügung gestellt. Jede Blindprobe ist vorzugsweise als klare Lösung in einer geeigneten und abgeschlossenen Küvette mit Identifikationsmittel ausgestaltet, welche vom Anwender direkt eingesetzt werden kann. Im Gegensatz zur Titration wird bei der UV/VIS-Spektroskopie die Probe nicht verbraucht und kann mehrfach verwendet werden. Um zu vermeiden, dass gealterte Blindproben für die Überprüfung eingesetzt werden, kann die Lösung der Prüfsubstanz mit einem Indikator versetzt werden, welcher beispielsweise unter Einfluss von der für die Messung eingesetzten Strahlung eine Veränderung erfährt, welche zu einer visuell erfassbaren Änderung der Blindprobe führt, beispielsweise einen Farbumschlag. Ebenso kann das Identifikationsmittel ein Haltbarkeitsdatum in der Identifikation enthalten, welches von der Prüfeinheit erfasst wird und welches verhindert, dass gealterte Proben vermessen werden. Die Überprüfung der Gerätekonfiguration des Spektrometers kann zudem eine Kalibrierung mit Luft bzw. ohne Küvette oder Probe umfassen, welche häufig routinemässig durchgeführt wird. Als Messwert wird ein Spektrum, mindestens ein Absorptionswert oder mindestens ein Intensitätswert für jede Blindprobe erfasst. Die Auswertung der Messergebnisse sowie die Ermittlung des Prüfergebnisses erfolgt im Wesentlichen wie bereits zuvor beschrieben, wobei entweder die Messwerte direkt oder aus den Messwerten ermittelte Prüfwerte ins Ergebnis einfliessen können. Wird die Absorption als Messwert gemessen, so kann z.B. daraus die Transmission berechnet und als Prüfwert verwendet werden.

Figur 5 zeigt stark schematisiert ein System zur Überprüfung der Funktionsfähigkeit eines Dichtemessgeräts 502 als Analysegerät.

Zur Dichtebestimmung mit dem in Figur 5 gezeigten Dichtemessgerät 502 wird eine fluide Blindprobe 505 in eine schwingfähige U-förmige Messzelle 520, z.B. ein Glasrohr, eingebracht. Die fluidgefüllte Messzelle 520 wird dann zu einer ungedämpften Schwingung oder Oszillation mittels einer Oszillationseinheit 521 angeregt. Anhand der Veränderung in der Frequenz und Periode der Oszillation im Vergleich zur mit einer Standard-Probe gefüllten Messzelle 520 kann die Dichte der Blindprobe 505 bestimmt werden. Das hier gezeigte Dichtemessgerät wird auch als Biegeschwinger bezeichnet.

Die Messzelle 520 ist wie auch eine Steuereinheit 507 und eine Prüfeinheit 504 in einem Gehäuse 522 des Dichtemessgeräts angeordnet. Weiterhin umfasst das Dichtemessgerät eine Ausgabeeinheit 503.

Die Blindprobe 505 weist zudem ein Identifikationsmittel 509 mit einer eineindeutigen maschinenlesbaren Identifikation auf. Die Blindprobe 505 kann beispielsweise in die Messzelle 520 eingespritzt werden oder auch mittels einer Pumpe eingesaugt werden. Für die Dichtebestimmung sollte die Messzelle komplett und möglichst blasenfrei gefüllt sein.

Für die Überprüfung eines Dichtemessgeräts mittels des erfindungsgemässen Verfahrens wird die Prüfsubstanz der jeweiligen Blindprobe aus dem Behältnis in die Messzelle des Dichtemessgeräts überführt und dort vermessen. Vorzugsweise wird die Identifikation des Identifikationsmittels vor der jeweiligen Messung ausgelesen und anschliessend von der Steuereinheit direkt an die Prüfeinheit übermittelt, wodurch Übertragungsfehler im Wesentlichen ausgeschlossen werden können. Die Dichte der ersten und zweiten Blindprobe wird als erster und zweiter Messwert erfasst, wobei die Prüfsubstanzen vorzugsweise in fliessfähiger Form vorliegen.

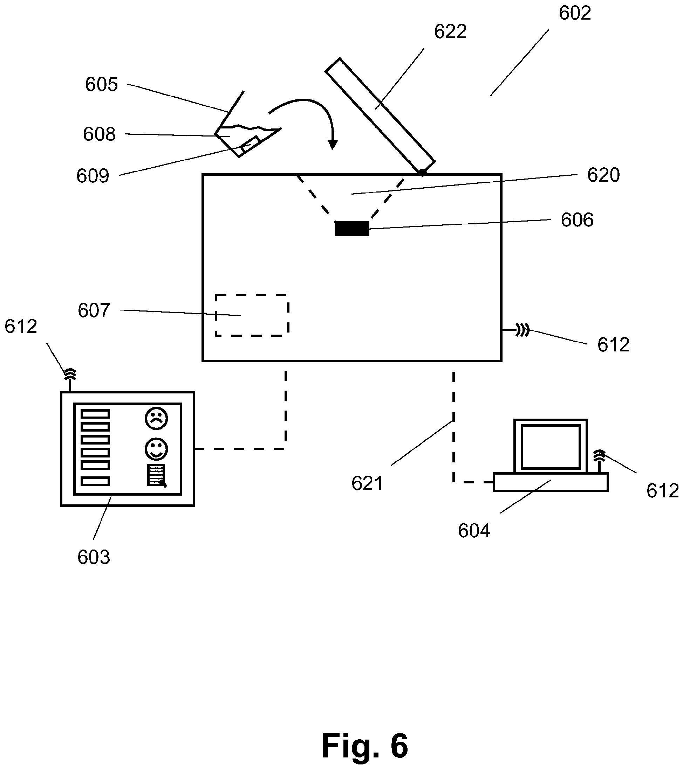

Figur 6 zeigt stark schematisiert ein System zur Überprüfung der Funktionsfähigkeit eines Refraktometers 602 als Analysegerät.

Mit einem Refraktometer 602 kann die Brechzahl einer Blindprobe 605 bestimmt werden, welche in einer Messzelle 620 angeordnet ist, die mit einem Deckel 621 gegen von aussen einfallendes Licht abgeschirmt ist. Am Boden der Messzelle 620 ist eine optische Einheit 606 angeordnet, mit welcher die Brechzahl über Reflektion ermittelt wird. Die Blindprobe 605 wird dem Anwender als Behältnis mit Identifikationsmittel 609 bereitgestellt, in welchem sich eine Prüfsubstanz 608 befindet. Das Refraktometer 602 umfasst zudem eine Steuereinheit 607.

Das System umfasst weiterhin eine Ausgabeeinheit 603 und eine Prüfeinheit 604. Die Ausgabeeinheit 603 und/oder die Prüfeinheit 604 können entweder über geeignete Übertragungskabel 621 direkt mit der oder als externe Einheiten über geeignete Übertragungsmittel 612 mit der Steuereinheit 607 verbunden sein. Unter Übertragungsmittel 612 werden hier sowohl direkte Funkverbindungen, die Verbindung über ein WLAN und/oder ein anders geartete webbasierte Verbindung verstanden.

Ebenso wie beim Dichtemessgerät wird auch für die Überprüfung des Refraktometers mit dem erfindungsgemässen Verfahren die vorzugsweise fliessfähige Prüfsubstanz der Blindprobe vom Behältnis in die Messzelle des Refraktometers überführt und die Brechzahl der Prüfsubstanz mindestens einmal vorzugsweise mehrfach als Messwert ermittelt.

Anstelle des hier gezeigten Einzel-Behältnisses kann ein Analysegerät auch mit einem hier nicht gezeigten Probenwechsler oder Probenrondell zusammenwirken, welches mehrere Proben umfasst, die automatisch nacheinander gemessen werden. Bei Reihenuntersuchungen können beispielsweise im Probenwechsler nach einer vorgegebenen Anzahl von Proben mindestens zwei Blindproben angeordnet sein, deren Identifikation automatisch von einem im Probenwechsler angeordneten Lesegerät erfasst wird, worauf automatisch das Prüfprogramm startet. Auf diese Weise kann die Funktionsfähigkeit des Analysegeräts während einer Reihenmessung einfach überprüft werden. Die automatische Auswahl und der automatische Start des Prüfprogramms kann selbstverständlich nicht nur mit einem Probenwechsler, sondern auch durch das Einlesen der Identifikation einer beliebigen ersten und zweiten Blindprobe durch die Steuereinheit ausgelöst werden.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden. Insbesondere können die System Teile untereinander über Kabel oder kabellos verbunden sein, ebenso kann das System ein in Bezug auf das Analysegerät externes oder internes Lesegerät aufweisen. Ebenso kann die Prüfeinheit des Analysegeräts in Bezug auf das Analysegerät als externe Einheit, als interne Einheit oder als Untereinheit der Steuereinheit ausgestaltet sein.

### Liste der Bezugszeichen

- 1: Prüfergebnis
- 202: Analysegerät
- 203, 303, 403, 503, 603: Ausgabeeinheit
- 204, 304, 404, 504, 604: Prüfeinheit
- 205, 305, 405, 505, 605: Blindprobe
- 206, 306, 406, 506, 606: Sensor
- 207, 307, 407, 507, 607: Steuereinheit
- 208, 308, 608: Prüfsubstanz
- 209, 309, 409, 509, 609: Identifikationsmittel
- 211: Behältnis
- 212, 612: Übertragungsmittel
- 220, 621: Kabel
- 302: Titrator
- 320: Gehäuse
- 321: Dosierelement
- 322: Titrierlösung
- 323: Flüssigkeitsverbindung
- 324: Halter
- 325: Rührer
- 402: UV/VIS Spektrometer
- 410: Lesegerät
- 420: Lichtquelle
- 502: Dichtemessgerät
- 520, 620: Messzelle
- 521: Oszillationseinheit
- 522: Gehäuse
- 602: Refraktometer
- 622: Deckel

## Patentansprüche

1. Verfahren zur Überprüfung eines Analysegeräts (202,302, 402, 502, 602), welches folgende Schritte umfasst:
a. Bereitstellen des Analysegeräts (202,302, 402, 502, 602), welches mindestens einen Sensor (206, 306, 406, 506, 606), eine Steuereinheit (207, 307, 407, 507, 607) und ein Prüfprogramm umfasst;
b. Auswählen des Prüfprogramms;
c. Bereitstellen mindestens einer ersten und zweiten Blindprobe (205, 305, 405, 505, 605), welche für den Anwender unbekannt sind und jeweils eine Prüfsubstanz und ein Identifikationsmittel (209, 309, 409, 509, 609) mit einer eineindeutigen Identifikation der jeweiligen Prüfsubstanz umfasst;
d. Überprüfen der Gerätekonfiguration des Analysegeräts (202,302, 402, 502, 602);
e. Messen der ersten Blindprobe (205, 305, 405, 505, 605) mit dem Analysegerät (202,302, 402, 502, 602) und Erfassen mindestens eines ersten Messwerts;
f. Messen der zweiten Blindprobe (205, 305, 405, 505, 605) mit dem Analysegerät und Erfassen mindestens eines zweiten Messwerts;
g. Erfassen und Übertragen der Identifikationen und des ersten und zweiten Messwerts an eine Prüfeinheit (204, 304, 404, 504, 606) und mittels der Prüfeinheit (204, 304, 404, 504, 606)
i. Identifizieren der ersten und zweiten Prüfsubstanz und eines ersten und zweiten Sollwerts der ersten und zweiten Blindprobe anhand deren Identifikationen,
ii. Ermitteln eines Prüfergebnisses (1) durch Vergleich der Messwerte und/oder mindestens eines anhand des ersten und/oder zweiten Messwerts ermittelten Prüfwerts mit den Sollwerten der ersten und zweiten Blindprobe unter Berücksichtigung eines ersten und zweiten Grenzwerts, welcher in der Prüfeinheit hinterlegt ist;
h. Bereitstellen einer Ausgabeeinheit (203, 303, 403, 503, 603);
i. Übertragen des Prüfergebnisses an die Steuereinheit (207, 307, 407, 507, 607) und Ausgeben des Prüfergebnisses mittels der Ausgabeeinheit (203, 303, 403, 503, 603).

2. Verfahren nach Anspruch 1 oder 2, **dadurch gekennzeichnet, dass** die Darstellung des Prüfergebnisses (1) eine
• Fehlermeldung;
• einfache Bestätigung,
• unabhängige Bestätigung oder
• validierte Bestätigung der Funktionsfähigkeit des Analysegeräts umfasst.

3. Verfahren nach Anspruch 1, **dadurch gekennzeichnet, dass** die Identifikation des Identifikationsmittels (209, 309, 409, 509, 609) einen maschinenlesbaren Code umfasst, insbesondere eine Seriennummer, einen Barcode, einen Matrixcode und/oder einen RFID-Tag, welcher erfasst und an die Prüfeinheit übertragen wird.

4. Verfahren nach einem der Ansprüche 1 bis 3, **dadurch gekennzeichnet, dass** die Prüfeinheit eine Untereinheit der Steuereinheit (407) des Analysengeräts (402) ist.

5. Verfahren nach einem der Ansprüche 1 bis 3, **dadurch gekennzeichnet, dass** die Prüfeinheit (204, 304, 604) eine vom Analysegerät (202, 302, 602) unabhängige externe Einheit ist.

6. Verfahren nach einem der Ansprüche 1 bis 5, **dadurch gekennzeichnet, dass** die Prüfeinheit eine Datenbank umfasst, welche die erste und zweite Identifikation der Identifikationsmittel mit dem entsprechenden Sollwert und/oder der entsprechenden Prüfsubstanz korreliert.

7. Verfahren nach einem der Ansprüche 1 bis 6, **dadurch gekennzeichnet, dass** das Analysegerät ein Titrator (302) ist, welcher mindestens einen Sensor (306), mindestens ein Dosierelement (321), mindestens eine Titrierlösung (322) mit bekanntem Titer, welche mit dem Dosierelement dosiert wird, und eine Steuereinheit (307) umfasst, in welcher ein Prüfprogramm hinterlegt ist, und dass das Verfahren folgende Schritte umfasst:
a. Auswählen des Prüfprogramms;
b. Bereitstellen einer ersten und zweiten Blindprobe (305) in Form einer Lösung, wobei jede Blindprobe eine Prüfsubstanz (308) und ein Identifikationsmittel (309) mit einer eineindeutigen Identifikation der jeweiligen Prüfsubstanz umfasst;
c. Überprüfen der Gerätekonfiguration des Titrators (302);
d. Titrieren der ersten und zweiten Blindprobe gegen die Titrierlösung und Erfassen eines ersten und zweiten Messwerts, welcher mit dem Verbrauch an Titrierlösung für die erste und zweite Titration korreliert ist;
e. Erfassen und Übertragen der Identifikationen der ersten und zweiten Blindprobe (305), des Titers und des ersten Messwerts an die Prüfeinheit (304); und mittels der Prüfeinheit (304):
i. Identifizieren der erste und zweiten Prüfsubstanz und der Soll-Stoffmengen der ersten und zweiten Prüfsubstanz als ersten und zweiten Sollwert anhand der Identifikationen der ersten und zweiten Blindprobe,
ii. Ermitteln der erste und zweiten Stoffmenge der erste und zweiten Prüfsubstanz,
iii. Ermitteln eines Prüfergebnisses durch Vergleich der ermittelte ersten und zweiten Stoffmenge mit der ersten und zweiten Soll-Stoffmenge unter Berücksichtigung der in der Prüfeinheit hinterlegten ersten und zweiten Grenzwerte;
f. Übertragen des Prüfergebnisses an die Steuereinheit (307) und Ausgeben des Prüfergebnisses mittels der bereitgestellten Ausgabeeinheit (303).

8. Verfahren nach einem der Ansprüche 1 bis 7, **dadurch gekennzeichnet, dass** das Analysegerät ein UV/VIS-Spektrometer (402) ist, welches einen Sensor (406), eine Strahlenquelle (420) und eine Steuereinheit (407) umfasst, in welcher ein Prüfprogramm hinterlegt ist, wobei das Verfahren ferner folgende Schritte umfasst:
a. Auswählen des Prüfprogramms;
b. Bereitstellen der ersten und zweiten Blindprobe (405) in Form einer Lösung, wobei die Blindprobe die Prüfsubstanz und das Identifikationsmittel (409) mit der eineindeutigen Identifikation der Prüfsubstanz umfasst;
c. Überprüfen der Gerätekonfiguration des Spektrometers (402);
d. Bestimmen eines ersten und zweiten Absorptionswerts und/oder einer ersten und zweiten Intensität des ersten und zweiten Absorptionswerts als erster und zweiter Messwert;
e. Erfassen und Übertragen der Identifikationen und der Messwerte an die Prüfeinheit (404) und mittels der Prüfeinheit (404)
i. Identifizieren der ersten und zweiten Prüfsubstanz und des ersten und zweiten Sollwerts der ersten und zweiten Blindprobe anhand deren Identifikationen,
ii. Ermitteln eines ersten und zweiten Prüfwerts anhand des ersten und zweiten Messwerts,
iii. Ermitteln des Prüfergebnisses durch Vergleichen des ersten und zweiten Prüfwerts mit dem ersten und zweiten Sollwert unter Berücksichtigung der in der Prüfeinheit (404) hinterlegten ersten und zweiten Grenzwerte;
f. Übertragen des Prüfergebnisses an die Steuereinheit (407) und Ausgeben des ersten Prüfergebnisses mittels der bereitgestellten Ausgabeeinheit (403).

9. Verfahren nach einem der Ansprüche 1 bis 6, **dadurch gekennzeichnet, dass** das Analysegerät ein Dichtemessgerät (502) und als mindestens ein Messwert die Dichte der Blindprobe erfasst wird.

10. Verfahren nach einem der Ansprüche 1 bis 6 oder 9, **dadurch gekennzeichnet, dass** das Analysegerät ein Refraktometer (602) und als mindestens ein Messwert die Brechzahl der Blindprobe erfasst wird.

11. Verfahren nach einem der Ansprüche 1 bis 10, **dadurch gekennzeichnet, dass** das Verfahren mit einer ersten, zweiten und/oder weiteren Blindproben durchgeführt wird, diese enthalten:
• dieselbe Prüfsubstanz und gleiche Parameter;
• dieselbe Prüfsubstanz und unterschiedliche Parameter;
• unterschiedliche Prüfsubstanzen und gleiche Parameter; oder
• unterschiedliche Prüfsubstanzen und unterschiedliche Parameter.

12. System zur Überprüfung der Funktionsfähigkeit eines Analysegeräts mittels des Verfahrens nach einem der Ansprüche 1 bis 11, welches System ein Analysegerät (202, 302, 402, 502, 602), eine Prüfeinheit (204, 304, 404, 504, 604), eine Ausgabeeinheit (203, 303, 403, 503, 603) und mindestens eine erste und zweite Blindprobe (205, 305, 405, 505, 605) umfasst; wobei das Analysegerät mindestens einen Sensor (206, 306, 406, 506, 606), eine Steuereinheit (207, 307, 407, 507, 607) und ein Prüfprogramm umfasst; wobei mit dem Analysegerät mindestens ein Messwert der Blindprobe erfasst wird; wobei die erste und zweite Blindprobe für den Anwender unbekannt sind und jeweils eine Prüfsubstanz (208, 308, 608) und ein Identifikationsmittel (209, 309, 409, 509, 609) zur eineindeutigen Identifikation der Prüfsubstanz umfasst; wobei die Prüfeinheit ein Erfassungsmodul, ein Berechnungsmodul, ein Datenmodul und ein Transfermodul umfasst, mit dem Transfermodul werden Daten und Informationen zwischen der Steuereinheit und der Prüfeinheit übertragen, mit dem Erfassungsmodul werden die Identifikation und ein erster und zweiter Messwert erfasst und anhand der Identifikationen die erste und zweite Prüfsubstanz und ein erster und zweiter Sollwert der ersten und zweiten Blindprobe ermittelt, welche im Datenmodul hinterlegt sind, mit dem Berechnungsmodul wird ein Prüfergebnis (1) durch Vergleich des ersten und zweiten Messwerts oder mindestens einem mit dem ersten und zweiten Messwert korrelierten ersten und zweiten Prüfwert mit einem im Datenmodul hinterlegten ersten und zweiten Sollwert unter Berücksichtigung eines im Datenmodul hinterlegten ersten und zweiten Grenzwerts ermittelt, und mit dem Transfermodul wird das Prüfergebnis an die Steuereinheit übertragen und mittels der Ausgabeeinheit ausgegeben.

13. System nach Anspruch 12, **dadurch gekennzeichnet, dass** das Analysegerät ein Titrator (302), ein UV/VIS Spektrometer (402) oder ein Refraktometer (502) und/oder ein Gerät zur Dichtebestimmung (602) ist.

14. System nach Anspruch 12 oder 13, **dadurch gekennzeichnet, dass** die Blindprobe (205) zudem ein Behältnis (211) umfasst, in welchem die Prüfsubstanz (208) als Feststoff oder in gelöster Form angeordnet ist.

15. System nach einem der Ansprüche 12 bis 14, **dadurch gekennzeichnet, dass** die Blindprobe zudem einen Indikator umfasst, welcher eine bereits für das Überprüfungsverfahren verwendete Blindprobe visuell kennzeichnet.

## Claims

1. A method for testing an analytical unit (202,302, 402, 502, 602), comprising the following steps:
a. Providing the analytical unit (202,302, 402, 502, 602), comprising at least one sensor (206, 306, 406, 506, 606), a control unit (207, 307, 407, 507, 607), and a test program;
b. Selecting the test program;
c. Providing at least one first and one second blind sample (205, 305, 405, 505, 605), which are unknown to the user and each of which comprises a test substance and an identification means (209, 309, 409, 509, 609) with a unique identification of the respective test substance;
d. Checking the unit configuration of the analytical unit (202,302, 402, 502, 602);
e. Measuring the first blind sample (205, 305, 405, 505, 605) with the analytical unit (202,302, 402, 502, 602) and recording at least one first measurement value;
f. Measuring the second blind sample (205, 305, 405, 505, 605) with the analytical unit and recording at least one second measurement value;
g. Recording and transmitting the identifications of the first and second measurement values to a test unit (204, 304, 404, 504, 606) and, by means of the test unit (204, 304, 404, 504, 606),
i. Identifying the first and second test substances and a first and a second target value of the first and second blind samples by means of the identifications thereof;
ii. Determining a test result (1) through comparison of the measurement values and/or at least one test value determined by means of the first and/or second measurement value, to the target values of the first and second blind samples with consideration of a first and a second limit value, which are stored in the test unit;
h. Providing an output unit (203, 303, 403, 503, 603);
i. Transmitting the test result to the control unit (207, 307, 407, 507, 607) and outputting the test result by means of the output unit (203, 303, 403, 503, 603).

2. The method according to claim 1 or 2, **characterized in that** the representation of the test result (1) comprises
• an error message;
• a simple confirmation;
• an independent confirmation; or
• validated confirmation of the function of the analytical unit.

3. The method according to claim 1, **characterized in that** the identification of the identification means (209, 309, 409, 509, 609) comprises a machine-readable code, particularly a serial number, a barcode, a matrix code, and/or an RFID tag, which is recorded and transmitted to the test unit.

4. The method according to any one of claims 1 to 3, **characterized in that** the test unit is a subunit of the control unit (407) of the analytical unit (402).

5. The method according to any one of claims 1 to 3, **characterized in that** the test unit (204, 304, 604) is an external unit independent of the analytical unit (202, 302, 602).

6. The method according to any one of claims 1 to 5, **characterized in that** the test unit comprises a database, which correlates the first and second identification of the identification means with the corresponding target value and/or the corresponding test substance.

7. The method according to any of claims 1 to 6, **characterized in that** the analytical unit is a titrator (302), comprising at least one sensor (306), at least one dispensing element (321), at least one titration solution (322) with a known titer, which is dispensed with the dispensing element, and a control unit (307), in which a test program is stored, and the method comprises the following steps:
a. Selecting the test program;
b. Providing a first and a second blind sample (305) in the form of a solution, wherein each blind sample comprises a test substance (308) and an identification means (309) with a unique identification of the respective test substance;
c. Checking the unit configuration of the titrator (302);
d. Titrating the first and second blind samples against the titration solution and recording of a first and a second measurement value, which is correlated with the consumption of titration solution for the first and second titrations;
e. Recording and transmitting the identifications of the first and second blind samples (305), of the titer, and of the first measurement value to the test unit (304); and, by means of the test unit (304):
i. Identifying the first and the second test substance and the target substance quantities of the first and second test substances as the first and second target values by means of the identifications of the first and second blind samples;
ii. Determining the first and second substance quantities of the first and second test substances;
iii. Determining a test result through comparison of the first and second substance quantities determined with the first and second target substance quantities with consideration of the first and second limit values stored in the test unit;
f. Transmitting the test result to the control unit (307) and outputting the test result by means of the output unit (303) provided.

8. The method according to any one of claims 1 to 7, **characterized in that** the analytical unit is a UV/VIS spectrometer (402), comprising a sensor (406), a radiation source (420), and a control unit (407), in which a test program is stored, wherein the method further comprises the following steps:
a. Selecting the test program;
b. Providing the first and second blind samples (405) in the form of a solution, wherein the blind sample comprises the test substance and the identification means (409) with the unique identification of the test substance;
c. Checking the unit configuration of the spectrometer (402);
d. Determining a first and a second absorption value and/or a first and a second intensity of the first and second absorption values as a first and a second measurement value;
e. Recording and transmitting the identifications and the measurement values to the test unit (404) and, by means of the test unit (404),
i. Identifying the first and the second test substance and the first and second target values of the first and second blind samples by means of the identifications thereof;
ii. Determining a first and a second test value by means of the first and second measurement values;
iii. Determining the test result through comparison of the first and second test values with the first and second target values with consideration of the first and second limit values stored in the test unit (404);
f. Transmitting the test result to the control unit (407) and outputting the first test result by means of the output unit (403) provided.

9. The method according to any of claims 1 to 6, **characterized in that** the analytical unit is a density measurement unit (502) and the density of the blind sample is recorded as at least one measurement value.

10. The method according to any of claims 1 to 6 or 9, **characterized in that** the analytical unit is a refractometer (602) and the refractive index of the blind sample is recorded as at least one measurement value.

11. The method according to any of claims 1 to 10, **characterized in that** the method is carried out with a first, second, and/or additional blind samples, which contain:
• the same test substance and the same parameters;
• the same test substance and different parameters;
• different test substances and the same parameters; or
• different test substances and different parameters.

12. A system for testing the function of an analytical unit by means of the method according to any one of claims 1 to 11, said system comprising an analytical unit (202, 302, 402, 502, 602), a test unit (204, 304, 404, 504, 604), an output unit (203, 303, 403, 503, 603), and at least one first and one second blind sample (205, 305, 405, 505, 605); wherein the analytical unit comprises at least one sensor (206, 306, 406, 506, 606), a control unit (207, 307, 407, 507, 607), and a test program; wherein at least one measurement value of the blind sample is recorded with the analytical unit; wherein the first and second blind samples are unknown to the user and comprise one test substance (208, 308, 608) and one identification means (209, 309, 409, 509, 609) for the unique identification of the test substance; wherein the test unit comprises a recording module, a computing module, a data module, and a transfer module; the transfer module transmits data and information between the control unit and the test unit; the recording module records the identification and a first and a second measurement value; and the identifications determine the first and second test substances and a first and a second target value of the first and second blind samples, which are stored in the data module; the computing module determines a test result (1) by comparing the first and second measured values or at least one first and one second test value correlated to the first and second measurement values with a first and a second target value stored in the data module with consideration of a first and second limit value stored in the data module; and the transfer module transmits the test result to the control unit and outputs it by means of the output unit.

13. The system according to claim 12, **characterized in that** the analytical unit is a titrator (302), a UV/VIS spectrometer (402), or a refractometer (502), and/or a device for determining density (602).

14. The system according to either claim 12 or 13, **characterized in that** the blind sample (205) additionally comprises a container (211), in which the test substance (208) is arranged as a solid or in dissolved form.

15. The system according to any of claims 12 to 14, **characterized in that** the blind sample additionally comprises an indicator, which visually identifies a blind sample already used for the testing method.

## Revendications

1. Procédé servant à vérifier un appareil d'analyse (202, 302, 402, 502, 602), qui comprend des étapes suivantes de :
a. mise à disposition de l'appareil d'analyse (202, 302, 402, 502, 602), qui comprend au moins un capteur (206, 306, 406, 506, 606), une unité de commande (207, 307, 407, 507, 607) et un programme de test ;
b. sélection du programme de test ;
c. mise à disposition au moins d'un premier et d'un deuxième échantillon témoin (205, 305, 405, 505, 605), qui sont inconnus de l'utilisateur et qui comprennent respectivement une substance de test et un moyen d'identification (209, 309, 409, 509, 609) avec une identification claire de la substance de test respective ;
d. vérification de la configuration d'appareil de l'appareil d'analyse (202, 302, 402, 502, 602) ;
e. mesure du premier échantillon témoin (205, 305, 405, 505, 605) avec l'appareil d'analyse (202, 302, 402, 502, 602) et détection d'au moins une première valeur de mesure ;
f. mesure du deuxième échantillon témoin (205, 305, 405, 505, 605) avec l'appareil d'analyse et détection d'au moins une deuxième valeur de mesure ;
g. détection et transmission des identifications et de la première et de la deuxième valeur de mesure à une unité de test (204, 304, 404, 504, 606) et au moyen de l'unité de test (204, 304, 404, 504, 606)
i. identification de la première et de la deuxième substance de test et d'une première et deuxième valeurs théoriques du premier et du deuxième échantillon témoin à l'aide de leurs identifications,
ii. ii. détermination d'un résultat de test (1) par comparaison des valeurs de mesure et/ou d'au moins une valeur de test déterminée à l'aide de la première et/ou de la deuxième valeurs de mesure à des valeurs théoriques du premier et du deuxième échantillon témoin en tenant compte de la première et de la deuxième valeur limite, qui est enregistrée dans l'unité de test ;
h. mise à disposition d'une unité de sortie (203, 303, 403, 503, 603) ;
i. transmission du résultat de test à l'unité de commande (207, 307, 407, 507, 607) et sortie du résultat de test au moyen de l'unité de sortie (203, 303, 403, 503, 603).

2. Procédé selon la revendication 1 ou 2, **caractérisé en ce que** la représentation du résultat de test (1) comprend
• un avertissement d'erreur ;
• une simple confirmation ;
• une confirmation indépendante ou
• une confirmation validée du bon fonctionnement de l'appareil d'analyse.

3. Procédé selon la revendication 1, **caractérisé en ce que** l'identification du moyen d'identification (209, 309, 409, 509, 609) comprend un code lisible par machine, en particulier un numéro de série, un code à barres, un code de matrice et/ou une étiquette RFID, qui est détecté et transmis à l'unité de test.

4. Procédé selon l'une quelconque des revendications 1 à 3, **caractérisé en ce que** l'unité de test est une sous-unité de l'unité de commande (407) de l'appareil d'analyse (402).

5. Procédé selon l'une quelconque des revendications 1 à 3, **caractérisé en ce que** l'unité de test (204, 304, 604) est une unité externe indépendante de l'appareil d'analyse (202, 302, 602).

6. Procédé selon l'une quelconque des revendications 1 à 5, **caractérisé en ce que** l'unité de test comprend une base de données, qui met en corrélation la première et la deuxième identification des moyens d'identification avec la valeur théorique correspondante et/ou la substance de test correspondante.

7. Procédé selon l'une quelconque des revendications 1 à 6, **caractérisé en ce que** l'appareil d'analyse est un titrateur (302), qui comprend au moins un capteur (306), au moins un élément de dosage (321), au moins une solution de titrage (322) avec un titre connu, qui est dosée avec l'élément de dosage, et une unité de commande (307), dans laquelle un programme de test est enregistré, et que le procédé comprend des étapes suivantes de :
a. sélection du programme de test ;
b. mise à disposition d'un premier et d'un deuxième échantillon témoin (305) sous la forme d'une solution, dans lequel chaque échantillon témoin comprend une substance de test (308) et un moyen d'identification (309) avec une identification claire de la substance de test respective ;
c. vérification de la configuration d'appareil du titrateur (302) ;
d. titrage du premier et du deuxième échantillon témoin par rapport à la solution de titrage et détection de la première et de la deuxième valeur de mesure, qui est corrélée avec la consommation en solution de titrage pour la première et la deuxième titration ;
e. détection et transmission des identifications du premier et du deuxième échantillon témoin (305), du titrage et de la première valeur de mesure à l'unité de test (304) ; et au moyen de l'unité de test (304) :
i. identification de la première et de la deuxième substance de test et des quantités de matière théoriques de la première et de la deuxième substance de test en tant que première et deuxième valeur théorique à l'aide des identifications du premier et du deuxième échantillon témoin,
ii. détermination de la première et de la deuxième quantité de matières de la première et de la deuxième substance de test,
iii. détermination d'un résultat de test par comparaison de la première et de la deuxième quantité de matière déterminée à la première et à la deuxième quantité de matière théorique en tenant compte des premières et deuxièmes valeurs limites enregistrées dans l'unité de test ;
f. transmission du résultat de test à l'unité de commande (307) et sortie du résultat de test au moyen de l'unité de sortie (303) mise à disposition.

8. Procédé selon l'une quelconque des revendications 1 à 7, **caractérisé en ce que** l'appareil d'analyse est un spectromètre UV/VIS (402), qui comprend un capteur (406), une source de rayonnement (420) et une unité de commande (407), dans laquelle un programme de test est enregistré, dans lequel le procédé comprend en outre des étapes suivantes de :
a. sélection du programme de test ;
b. mise à disposition du premier et du deuxième échantillon témoin (405) sous la forme d'une solution, dans lequel l'échantillon témoin comprend la substance de test et le moyen d'identification (409) avec l'identification claire de la substance de test ;
c. vérification de la configuration d'appareil du spectromètre (402) ;
d. définition d'une première et d'une deuxième valeur d'absorption et/ou d'une première et deuxième intensité de la première et de la deuxième valeur d'absorption en tant que première et deuxième valeur de mesure ;
e. détection et transmission des identifications et des valeurs de mesure à l'unité de test (404) et au moyen de l'unité de test (404)
i. identification de la première et de la deuxième substance de test et de la première et deuxième valeur théorique du premier et deuxième échantillon témoin à l'aide de leurs identifications,
ii. détermination d'une première et deuxième valeur de test à l'aide de la première et deuxième valeur de mesure,
iii. détermination du résultat de test par comparaison de la première et deuxième valeur de test à la première et deuxième valeur théorique en tenant compte des premières et deuxièmes valeurs limites enregistrées dans l'unité de test (404) ;
f. transmission du résultat de test à l'unité de commande (407) et sortie du premier résultat de test au moyen de l'unité de sortie (403) mise à disposition.

9. Procédé selon l'une quelconque des revendications 1 à 6, **caractérisé en ce que** l'appareil d'analyse est un densimètre (502) et la densité de l'échantillon témoin est détectée en tant qu'au moins une valeur de mesure.

10. Procédé selon l'une quelconque des revendications 1 à 6 ou 9, **caractérisé en ce que** l'appareil d'analyse est un réfractomètre (602) et l'indice de réfraction de l'échantillon témoin est détecté en tant qu'au moins une valeur de mesure.

11. Procédé selon l'une quelconque des revendications 1 à 10, **caractérisé en ce que** le procédé est exécuté avec un premier, un deuxième et/ou d'autres échantillons témoins, qui contiennent :
• la même substance de test et des paramètres identiques ;
• la même substance de test et des paramètres différents ;
• des substances de test différentes et des paramètres identiques ; ou
• des substances de test différentes et des paramètres différents.

12. Système servant à vérifier le bon fonctionnement d'un appareil d'analyse au moyen du procédé selon l'une quelconque des revendications 1 à 11, lequel système comprend un appareil d'analyse (202, 302, 402, 502, 602), une unité de test (204, 304, 404, 504, 604), une unité de sortie (203, 303, 403, 503, 603) et au moins un premier et un deuxième échantillon témoin (205, 305, 405, 505, 605), dans lequel l'appareil d'analyse comprend au moins un capteur (206, 306, 406, 506, 606), une unité de commande (207, 307, 407, 507, 607) et un programme de test ; dans lequel au moins une valeur de mesure de l'échantillon témoin est détectée avec l'appareil d'analyse ; dans lequel le premier et le deuxième échantillon témoin sont inconnus de l'utilisateur et comprennent respectivement une substance de test (208, 308, 608) et un moyen d'identification (209, 309, 409, 509, 609) servant à l'identification claire de la substance de test ; dans lequel l'unité de test est un module de détection, un module de calcul, un module de données et un module de transfert, des données et informations sont transmises avec le module de transfert entre l'unité de commande et l'unité de test, l'identification et une première et une deuxième valeur de mesure sont détectées avec le module de détection et la première et la deuxième substance de test et une première et une deuxième valeur théorique du premier et du deuxième échantillon témoin sont déterminées à l'aide des identifications, lesquelles sont enregistrées dans le module de données, un résultat de test (1) est déterminé avec le module de calcul par comparaison de la première et de la deuxième valeur de mesure ou d'au moins une première et deuxième valeur de test corrélée avec la première et la deuxième valeur de mesure à une première et deuxième valeur théorique enregistrée dans le module de données en tenant compte d'une première et deuxième valeur limite enregistrée dans le module de données, et le résultat de test est transmis à l'unité de commande avec le module de transfert et est sorti avec l'unité de sortie.

13. Système selon la revendication 12, **caractérisé en ce que** l'appareil d'analyse est un titrateur (302), un spectromètre UV/VIS (402) ou un réfractomètre (502) et/ou un appareil de définition de densité (602).

14. Système selon la revendication 12 ou 13, **caractérisé en ce que** l'échantillon témoin (205) comprend de plus un récipient (211), dans lequel la substance de test (208) est disposée en tant que matière solide ou sous une forme dissoute.

15. Système selon l'une quelconque des revendications 12 à 14, **caractérisé en ce que** l'échantillon témoin comprend de plus un indicateur, qui caractérise visuellement un échantillon témoin déjà utilisé pour le procédé de vérification.
